# EUROPEAN PATENT SPECIFICATION

(11) **EP 0 974 268 B1**
(45) Date of publication and mention of the grant of the patent: **04.02.2004**
(21) Application number: 98902251.2
(22) Date of filing: 17.02.1998
(51) Int. Cl.: A23C 9/127, A23C 9/123, C12N 1/20

(54) **BIFIDOBACTERIUM-FERMENTED MILK AND PROCESS FOR PRODUCING THE SAME**
DURCH BIOFIDOBAKTERIUM HERGESTELLTE SAUERMILCH SOWIE VERFAHREN ZUR HERSTELLUNG DERSELBEN
LAIT FERMENTE PAR BIFIDOBACTERIUM ET PROCEDE DE PRODUCTION

(30) Priority: 17.02.1997 JP 3210197
(43) Date of publication of application: 26.01.2000
(73) Proprietor: Kabushiki Kaisha Yakult Honsha, Minato-ku, Tokyo 105-0021 (JP)
(72) Inventor: MATSUI, Akihisa, Kabushiki Kaisha Yakult Honsha, Tokyo 105-0021 (JP); MITA, Kaori, Kabushiki Kaisha Yakult Honsha, Tokyo 105-0021 (JP); MIZOBUCHI,Takahiro, Kabushiki Kaisha Yakult Honsha, Tokyo 105-0021 (JP); AKAHOSHI, Ryoichi, Kabushiki Kaisha Yakult Honsha, Tokyo 105-0021 (JP)
(74) Representative: Hartz, Nikolai F., Dr.
(86) International application number: PCT/JP1998/000639
(87) International publication number: WO 1998/035564

(56) References cited:
- JP-A- 9 023 848
- JP-A- 51 144 762
- JP-A- 54 014 585
- JP-A- 63 094 938
- DATABASE WPI Section Ch, Week 199639 Derwent Publications Ltd., London, GB; Class D13, AN 1996-387235 XP002156426 & JP 08 187072 A (MORINAGA MILK IND CO LTD), 23 July 1996 (1996-07-23)

## Description

The present invention relates to bifidobacterium-fermented milk and production process thereof.

The bifidobacteria are known to be useful bacteria found in the human intestines and exhibit inhibitory action against the growth of pathogenic bacteria occurring in conjunction with lowering of the pH in the intestines caused by the production of an organic acid.

The bifidobacteria, in general, have however the characteristics as will be described below, which have posed problems from the viewpoints of the production of bifidobacterium-fermented milk and maintenance of a viable count in the fermented milk.
1. Owing to their complex and severe nutritional requirements, they do not proliferate in a pure milk medium not containing a growth promoter such as yeast extract. In addition, the growth promoter is usually expensive and moreover, the addition of it impairs the flavor of the cultured product.
2. Because of being obligate anaerobe, they do not grow and tend to die out in the presence of oxygen.
3. Compared with the ordinary lactic acid bacteria for dairy use, they have markedly low acid resistance so that it is difficult to allow them to grow for a long time in a low pH range as in fermented milk.

various researches have been made with a view to improving the survivability of the bifidobacteria. For example, Japanese Patent Application Laid-Open No. Sho 54-14585 describes that improvements in the proliferative property and viable count of the bifidobacteria and lactic acid bacteria are brought about even under aerobic conditions by mix-culturing of the bifidobacteria with slow-acid-producing lactic acid bacteria such as *Lactobacillus·acidophilus* or *Lactobacillus·salivarius.*

Furthermore, Japanese Patent Application Laid-Open No. Sho 63-94938 describes that the survivability of the bifidobacteria is improved by mix-culturing of the bifidobacteria with *Streptococcus·diacetylactis*. The above literature says that *Streptococcus·diacetylactis*, different from *Streptococcus·cremoris* or *Streptococcus·lactis* which is analogous thereto, is characterized by the formation of diacetyl and acetoin from citric acid in the fermentation substrate by the decarbonation reaction. Carbon dioxide formed by the reaction increases the anaerobic degree of the fermented milk and is therefore effective for the protection of the bifidobacteria.

The *Streptococcus*·*diacetylactis* is however accompanied with the problem that it is not suited for practical use, because the resulting diacetyl and acetoin impart bifidobacterium-fermented milk with unfavorable flavor.

Accordingly, an object of the present invention is to provide bifidobacterium-fermented milk improved in the survivability of bifidobacteria without using a growth promoter and without forming diacetyl and acetoin; and a production process thereof.

### Disclosure of the Invention

With the foregoing in view, the present inventors have repeated extensive investigations to overcome the above-described problem. As a result, it has been found that by mix-culturing a specific lactic acid bacterium, which has been even regarded in Japanese Patent Application Laid-Open No. Sho-63-94938 to have no effects for improving survivability of the bifidobacteria and has also been regarded in Japanese Patent Application Laid-Open No. Sho 54-14585 to be unusable because it kills the bifidobacteria in the initial stage of the incubation, with a specific bifidobacterium, a markedly higher viable count of bifidobacteria than that obtained by the ordinary incubating method can be achieved even on a pure milk medium free from a growth promoter; and that the survivability of the bifidobacteria during the storage of the fermented milk can be highly improved, leading to the completion of the present invention.

The present invention therefore provides a process for producing bifidobacterium-fermented milk, which comprises mix-culturing *Bifidobacterium·breve* with *Lactococcus· lactis·subspecies·lactis*, which forms neither diacetyl nor acetoin, on a medium composed mainly of milk; the bifidobacterium-fermented milk thus obtained; and *Lactococcus·lactis·subspecies·lactis* YIT2027 (FERM BP-6224) which is a novel strain.

### Best Modes for Carrying Out the Invention

*Lactococcus·lactis·subspecies·lactis* is conventionally used for the production of cheese and the like, but that used in the present invention features that it forms neither diacetyl nor acetoin. Specific examples include strain YIT2027 (FERM BP-6224) and strain YIT2008 (ATCC 19435), of which the strain YIT2027 is particularly preferred. It should be noted that "*Lactococcus*·*lactis*·*subspecies*·*lactis*" according to new taxonomy embraces "*Streptococcus·lactis·subspecies*· *diacetylactis*" according to the old taxonomy which is employed in the above-described Japanese Patent Application Laid-Open No. Sho 63-94938, however, the latter one is eminently different from the strain to be used in the present invention because it forms diacetyl and acetoin. The lactic acid bacterium to be used in the present invention corresponds to "*Streptococcus·lactis·subspecies·lactis*" according to the old taxonomy which has been regarded to have capacity of forming neither diacetyl nor acetoin and have no effects for improving the survivability of the bifidobacteria in the above literature. The lactic acid bacterium to be used in the present invention is not included in the "slow-acid-producing lactic acid bacteria" referred to in Japanese Patent Application Laid-Open No. Sho 54-14585, because when it is subjected to monocyte incubation under aerobic conditions, the product obtained by incubation for 48 hours has an acidity of at least 10. It corresponds to a group of the lactic acid bacteria which has been regarded to bring the bifidobacteria into death in the initial stage of the incubation and therefore be unusable.

Biochemical properties of the strain YIT 2027 belonging to *Lactococcus·lactis·subspecies·lactis* which forms neither diacetyl nor acetoin are shown in Table 1 and Table 2.

**Table 1**

| | YIT2027 | *Lactococcus·lactis·subspecies·lactis*^{a)} | *Lactococcus·lactis·subspecies·lactis*^{b)} |
|---|---|---|---|
| Gram staining | Positive | Positive | Positive |
| Morphology | Spherical | Spherical | Spherical |
| Catalase | - | - | - |
| Gas production from glucose | - | - | - |
| Proliferation | | | |
| 10°C | + | + | |
| 40°C | + | + | |
| 45°C | - | - | |
| 60°C for 30 min. | + | | |
| 2% NaCl | + | + | |
| 4% NaCl | + | + | |
| 6.5% NaCl | - | - | |
| 0.1% methylene blue milk | + | | |
| 40% bile | + | + | |
| Hydrolysis of arginine | + | d | |
| Hydrolysis of esculin | - | d | |
| Hydrolysis of starch | - | | |
| Hydrolysis of hippurate | - | d | |
| Reduction of nitrate | - | | |
| V-P test | - | | |
| GC content (%) | | 38.6 (Tm method) | 35.8 |

| | | | |
|---|---|---|---|
| a) : Data described in "Bergey's Manual Vo. 2" | | | |
| b): Data described in "Microorganism, vol.6, No.1 (1990)" | | | |
| +: positive, | | | |
| -: negative, | | | |
| d: 11 to 89% is positive | | | |

**Table 2**

| | YIT2027 | *Lactococcus·lactis·subspecies·lactis*^{a)} | *Lactococcus·lactis· subspecies·lactis*^{b)} |
|---|---|---|---|
| Sugar fermentation test | | | |
| Arabinose | - | | - |
| Xylose | - | | d |
| Rhamnose | - | - | |
| Ribose | + | + | + |
| Mannose | + | | + |
| Fructose | + | | + |
| Galactose | + | | + |
| Sucrose | - | | d |
| Maltose | + | | + |
| Cellobiose | + | | + |
| Lactose | + | | + |
| Trehalose | + | | + |
| Melibiose | - | | - |
| Raffinose | - | - | - |
| Melezitose | - | | - |
| Mannitol | - | | - |
| Sorbitol | - | - | - |
| Esculin | + | | |
| Salicin | + | | + |
| Amygdalin | + | | d |
| Sorbose | - | | |
| Inositol | - | | |
| Inulin | - | | |
| Starch | + | | d |
| α-Methyl-D-glucoside | - | | |
| Glucose | + | | + |
| Dextrin | + | - | |
| Glycogen | - | | |

| | | | |
|---|---|---|---|
| a): Data described in "Bergy's Manual Vol. 2" | | | |
| b): Data described in "Microorganism, vol.6, No.1(1990)" | | | |
| +: positive, | | | |
| -: negative, | | | |
| d: 11 to 89% is positive | | | |

As is apparent from Table 1 and Table 2, the strain according to the present invention coincides with the known *Lactococcus·lactis·subsp·lactis* in many properties, however, is different in the hydrolysis of hippurate and sugar fermentation properties by xylose, sucrose and dextrin. The applicant of the present invention therefore identified it as a novel strain and deposited it as FERM BP-6224 to National Institute of Bioscience and Human Technology, Ministry of International Trade and Industry (address: 1-3, Higashi 1-chome, Tsukuba-shi, Ibaraki-ken, 305-0046, Japan) under the Budapest Treaty (date of original deposit: February 10, 1997).

Examples of the *Bifidobacterium·breve* to be used in the present invention include the strain YIT4065 [FERM BP-6223, deposited to National Institute of Bioscience and Human Technology, Ministry of International Trade and Industry (1-3, Higashi 1-chome, Tsukuba-shi, Ibaraki-ken, 305-0046, Japan), date of deposition: February 29, 1996] and strain YIT4014 (ATCC 15700), of which the strain YIT4065 is particularly preferred.

In the present invention, no particular limitation is imposed on the medium to be used upon mix-culturing of the above-described bifidobacteria and lactic acid bacteria insofar as it is composed mainly of milk. For example, any milk (whole milk, skim milk and reconstituted milk from such powdery milk) having a milk solid content concentration of about 8 to 20 wt.% which is usually provided for the incubation of lactic acid bacteria can be used. It is not necessary to use a growth promoter such as yeast extract or peptone or a reducing agent such as L-ascorbic acid or L-cysteine, which is often added to a medium conventionally used for bifidobacteria or lactic acid bacteria, but it can be added when the influence of it on the flavor of the final product falls within a permissible range or when it does not disturb the properties of the final product.

The inoculation ratio of the starter of the bifidobacteria to the starter of the lactic acid bacteria preferably falls within a range of 10000:1 to 1:1, with 100:1 to 10:1 being particularly preferred. The inoculation amount is preferably 0.5 to 10 wt.% (which will hereinafter be called "%", simply), with 1 to 2 % being particularly preferred.

The incubation is effected at a temperature permitting the growth of both bifidobacteria and lactic acid bacteria, more specifically, 35 to 39°C, with 36 to 38°C being particularly preferred. The incubation is carried out until the bifidobacteria and lactic acid bacteria reach the steady proliferation state. More specifically, it is preferred to conduct incubation until pH reaches 4.2 to 4.6, particularly, 4.3 to 4.5.

The product obtained by incubation may be provided as a food containing bifidobacteria and lactic acid bacteria without any further treatment or may be provided as a beverage after added with a sweetener, fruit juice, water, fragrance or the like as needed to adjust its concentration and flavor. In addition, it may be provided as a food or preparation in the form of powders or tablets containing bifidobacteria and lactic acid bacteria after drying. No limitation is imposed on the processing means of the incubation product or form of the processed product insofar it does not cause these bacteria to death.

As described above, *Bifidobacterium·breve* is recognized to exhibit both proliferation promoting effects and survivability improving effects when incubated together with *Lactococcus·subsp·lactis* which forms neither diacetyl nor acetoin. Some slow-acid-producing lactic acid bacteria such as *Lactobacillus·acidophilus* and *Lactobacillus·bulgaris* are recognized to have proliferation promoting effects of bifidobacteria but they do not bring about marked survivability improving effects. The reason for the exhibition of both effects is presumed to owe to that when bifidobacteria are used in combination with *Lactococcus·subsp·lactis*, incubation can be conducted under the conditions advantageous for bifidobacteria by controlling the temperature in consideration of the difference in the optimum incubation temperature between *Lactococcus·subsp·lactis* and *Bifidobacterium·breve* and a symbiotic relation permitting improvements in nutritional requirement and oxygen resistance of *Bifidobacterium·breve* is established between them.

### - Examples -

The present invention will hereinafter be described more specifically by examples. It should however be borne in mind that the present invention is not limited by them.

### Example 1

### Confirmation of proliferation promoting effects and survivability improving effects for bifidobacteria brought about by mix-culturing with lactic acid bacteria

On each of 10% reconstituted skim milk mediums, which had been sterilized by heating at 95°C for 30 minutes and then cooled to 37°C, used as a fermentation substrate, 1% of a starter for *Bifidobacterium*^{*.*}*breve* strain YIT4065 (FERM BP-6223) was inoculated. To the resulting medium, *Streptococcus*^{*.*}*thermophilus*, *Lactobacillus*^{*.*}*bulgaris* or *Lactococcus*^{*.*}*lactis*^{*.*}*subspecies*^{*.*}*lactis* strain YIT2027 (FERM BP-6224) was inoculated in an amount of 0.01%. The inoculated medium and a control medium inoculated with only the above-described bifidobacteria were incubated at 37°C until the pH became 4.3. The viable count of bifidobacteria after incubation was measured. The cell solution after incubation was filled in a glass-made container, followed by anaerobic storage at 10°C for 2 weeks. The viable count of bifidobacteria after storage was also confirmed. The results are shown in Table 3.

**Table 3**

| Lactic acid bacteria | Viable count of bifidobacteria (/ml) | |
|---|---|---|
| | when incubation is completed | after storage |
| Not added | 8.0 x 10⁸ | ∗ |
| *Streptococcus·thermophilus* | 6.3 x 10⁷ | 7.0 x 10⁵ |
| *Lactobacillus·bulgaris* | 1.5 x 10⁷ | 1.0 x 10⁵ |
| *Lactococcus·lactis·subspecies·lactis* | 2.0 x 10⁹ | 3.4 x 10⁸ |

| | | |
|---|---|---|
| ∗ Incubation was terminated at pH 5.0 so that the storage test was not conducted. | | |

As is apparent from Table 3, it has been recognized that compared with not only the control but also the *Bifidobacterium*^{*.*}*breve* incubated with other lactic acid bacteria, the *Bifidobacterium breve* incubated with the strain YIT2027 exhibited a larger viable count of the bifidobacteria, indicating marked bifidobacterium proliferation promoting effects. Even after the storage of the cell solution, the viable count of bifidobacteria is maintained high at a low pH, indicating marked survivability improving effects.

### Example 2

### Confirmation of bifidobacterium survivability in a product having a non-fat milk solid content of 8% (anaerobic storage)

To a medium of 20% reconstituted skim milk, 1% of a starter of *Bifidobacterium breve* strain YIT4065 (FERM BP-6223) and 0.01% of a starter of *Lactococcus·lactis·subspecies·lactis* strain YIT2027 (FERM BP-6224) were inoculated, followed by incubation at 37°C until the pH reached 4.4. The incubated product was homogenized in a conventional manner. To the homogenized product, a cell solution obtained by incubating *Streptococcus·thermophilus*, sweetener, a syrup containing HM pectin as a stabilizer and flavor were added for the adjustment of flavor, whereby a fermented milk product having a non-fat milk solid content of 8% was obtained. As a comparative example, *Bifidobacterium·breve* strain YIT4065 was incubated on a conventionally-employed medium of 10% reconstituted skim milk containing 0.05% yeast extract and a fermented milk product having a nonfat milk content of 8% was obtained similarly. These products were each charged in a glass-made container, followed by anaerobic storage at 10°C for 2 weeks. The viable counts of bifidobacteria before and after storage were confirmed. The results are shown in Table 4.

**Table 4**

| Incubation method | Viable count of bifidobacteria (/ml) | | |
|---|---|---|---|
| | Stored for 0 day | Stored for 7 days | Stored for 14 days |
| Conventional method (using yeast extract) | 3.1 x 10⁸ | 4.5 x 10⁷ | 1.7 x 10⁷ |
| Method according to the present invention (using *lactis*) | 6.9 x 10⁸ | 5.1 x 10⁸ | 1.8 x 10⁸ |

As is apparent from Table 4, it has been confirmed that by the application of the present invention to the production of fermented milk beverage, a high viable count of bifidobacteria can be achieved and even after storage, the viable count at least 10 times as much as that of the conventional method using a growth promoter can be maintained.

### Example 3

### Confirmation of bifidobacteria survivability in a product having a nonfat milk solid content of 4% (aerobic storage)

To a medium of 20% reconstituted skim milk, 1% of a starter of *Bifidobacterium*^{*.*}*breve* strain YIT4065 (FERM BP-6223) and 0.01% of a starter of *Lactococcus*^{*.*}*lactis*^{*.*}*subspecies*^{*.*}*lactis* strain YIT2027 (FERM BP-6224) were inoculated, followed by incubation at 37°C until the pH reached 4.4. The incubated product was homogenized in a conventional manner. To the homogenized product, a cell solution obtained by incubating *Streptococcus*^{*.*}*thermophilus*, sweetener, a syrup containing HM pectin as a stabilizer and flavor were added for the adjustment of flavor, whereby a fermented milk product having a nonfat milk solid content of 4% was obtained. As a comparative example, *Bifidobacterium*^{.}*breve* strain YIT4065 was incubated on a conventionally-employed medium of 10% reconstituted skim milk containing 0.05% yeast extract and a fermented milk product having a nonfat milk content of 4% was obtained similarly. These products were each charged in a polystyrene-made container, followed by storage at 10°C for 2 weeks. The viable counts of bifidobacteria before and after storage were confirmed. The results are shown in Table 5.

**Table 5**

| Incubation method | Viable count of bifidobacteria (/ml) | | |
|---|---|---|---|
| | Stored for 0 day | Stored for 7 days | Stored for 14 days |
| Conventional method (using yeast extract) | 1.5 x 10⁸ | 1.1 x 10⁷ | 9.2 x 10⁵ |
| Method according to the present invention (using *lactis*) | 4.7 x 10⁸ | 1.0 x 10⁸ | 2.3 x 10⁷ |

As is apparent from Table 5, it has been recognized that markedly high survivability improving effects are brought about even for a product having a low nonfat milk solid content or a product exposed to aerobic storage conditions after production so that high general-purpose properties of the present invention are confirmed.

### Capability of Exploitation in Industry

As described above, according to the present invention, a markedly high viable count of the bifidobacteria can be achieved even without the addition of a growth promoter and in addition, the survivability of bifidobacteria during the storage of the fermented milk can be improved substantially. Because of being free from diacetyl and acetoin, the bifidobacterium-fermented milk obtained according to the present invention has a good flavor.

## Claims

1. A process for producing bifidobacterium-fermented milk, which comprises mix-culturing *Bifidobacterium ·breve* with *Lactococcus ·lactis ·subspecies ·lactis* YIT2027 (FERM BP-6224), which forms neither diacetyl nor acetoin, on a medium composed mainly of milk.

2. A process for producing bifidobacterium-fermented milk according to claim 1, wherein *Bifidobacterium ·breve* is YIT4065 (FERM BP-6223).

3. Bifidobacterium-fermented milk obtainable by a process as claimed in claim 1 or 2.

4. *Lactococcus ·lactis ·subspecies ·lactis* YIT2027 (FERM BP-6224).

## Patentansprüche

1. Verfahren zur Herstellung von durch Bifidobacterium fermentierte Milch, das ein Misch-Kultivieren von *Bifidobacterium · breve* mit *Lactococcus · lactis · subspecies · lactis* YIT2027 (FERM BP-6224), das weder Diacetyl noch Acetoin bildet, auf einem Medium, das hauptsächlich oder überwiegend aus Milch zusammengesetzt ist, umfasst.

2. Das Verfahren zur Herstellung von durch Bifidobacterium fermentierte Milch gemäß Anspruch 1, wobei *Bifidobacterium ·breve* YIT4065 (FERM BP-6223) ist.

3. Durch Bifidobacterium fermentierte Milch, erhältlich durch ein Verfahren wie es in Anspruch 1 oder 2 definiert ist.

4. *Lactococcus ·lactis ·subspecies ·lactis* YIT2027 (FERM BP-6224).

## Revendications

1. Procédé de production de lait fermenté par bifidobacterium, qui comprend la culture en mélange de Bifidobacterium .breve avec Lactococcus .lactis .sous-espèce .lactis YIT2027 (FERM BP-6224), qui ne forme ni diacétyle ni acétoïne, sur un milieu composé principalement de lait.

2. Procédé de production de lait fermenté par bifidobacterium selon la revendication 1, dans lequel Bifidobacterium .breve est YIT4065 (FERM BP-6223).

3. Lait fermenté par bifidobacterium, pouvant être obtenu par un procédé tel que revendiqué dans la revendication 1 ou 2.

4. Lactococcus .lactis .sous-espèce .lactis YIT2027 (FERM BP-6224).
